(19) **Europäisches Patentamt**
**European Patent Office**
**Office européen des brevets**

(11) **EP 3 951 153 B1**

(12) **EUROPEAN PATENT SPECIFICATION**

(45) Date of publication and mention
of the grant of the patent:
**01.05.2024 Bulletin 2024/18**

(21) Application number: **21180545.2**

(22) Date of filing: **21.06.2021**

(51) International Patent Classification (IPC):
**F02D 35/02** (2006.01)    **F02D 41/30** (2006.01)
**F02D 13/02** (2006.01)    **F02D 41/00** (2006.01)
**F02D 41/14** (2006.01)

(52) Cooperative Patent Classification (CPC):
**F02D 13/0261; F02D 13/0207; F02D 35/02;**
**F02D 35/026; F02D 35/028; F02D 41/006;**
F02D 13/0273; F02D 41/3035; F02D 2041/1412;
F02D 2041/1433; F02D 2041/1437; Y02T 10/12;
Y02T 10/40

(54) **METHOD FOR PREDICTING COMBUSTION STATE OF ENGINE**

VERFAHREN ZUR VORHERSAGE DES VERBRENNUNGSSTATUS EINES MOTORS

PROCÉDÉ DE PRÉDICTION DE L'ÉTAT DE COMBUSTION D'UN MOTEUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **01.07.2020 JP 2020113904**

(43) Date of publication of application:
**09.02.2022 Bulletin 2022/06**

(73) Proprietor: **MAZDA MOTOR CORPORATION**
**Hiroshima 730-8670 (JP)**

(72) Inventors:
• **IIDA, Shinya**
**Fuchu-cho, Aki-gun,, 730-8670 (JP)**
• **MUTO, Mitsuhiro**
**Fuchu-cho, Aki-gun,, 730-8670 (JP)**
• **FUJII, Takuma**
**Fuchu-cho, Aki-gun,, 730-8670 (JP)**

(74) Representative: **Müller-Boré & Partner**
**Patentanwälte PartG mbB**
**Friedenheimer Brücke 21**
**80639 München (DE)**

(56) References cited:
**EP-A1- 1 571 331        EP-A1- 3 599 360**
**JP-A- 2008 075 633**

• **B. LAULER: "Refinement and Validation of the**
**Thermal Stratification Analysis:**
**Apost-processing methodology for determining**
**temperature distributions in an experimental**
**HCCI engine", SAE2014-01-12, 2014, page 76,**
**XP002805085,**

**Description**

[Technical Field]

The present invention relates to a method of predicting or calculating the combustion state in the cylinder of an engine.

[Background Art]

For the purpose of improving the fuel efficiency of an engine and the exhaust gas performance, a technique for accurately predicting the combustion state in the cylinder of the engine has been conventionally proposed to precisely control the combustion of the engine. For example, patent document 1 discloses a technique for suppressing the calculation load and improving the estimation accuracy by estimating the state quantity in the cylinder (in the combustion chamber) using a linear parameter model for a compression self-ignition engine.

[Prior Art Documents]

[Patent documents]

[Patent document 1] JP-A-2018-200026
JP 2008 075633 A describes that an estimated value of an in-cylinder unburnt gas temperature is calculated on the basis of an operating condition of the engine, and the model function is corrected per each engine speed area on the basis of the calculated in-cylinder unburnt gas temperature.

[Summary]

[Problem to be solved]

However, the technique described in patent document 1 above is insufficient to accurately predict the combustion state of an engine in transient operation. In particular, this technique has difficult in accurately predicting the combustion end timing that changes due to the wall temperature in the cylinder and the like during transient operation. On the other hand, the inventors of the present application have thought that the combustion end timing can be accurately predicted by precisely obtaining the state of the region in which combustion occurs last in the cylinder, that is, the region (for example, the region near the cylinder liner) near the wall surface forming the cylinder, which is the lowest temperature region in the cylinder.
The present invention addresses the problems of the prior art described above with an object of predicting the combustion state of an engine in transient operation.

[Means for solving the Problem]

The above problem is solved by the invention as defined in the independent claim.
Particularly, to achieve the object described above, according to the present invention, there is provided a method of predicting or calculating a combustion state of an engine, the method including an operating condition setting step of setting an operating condition of the engine; a highest temperature portion temperature calculation step of calculating a temperature of a highest temperature portion based on the operating condition, the highest temperature portion being a region in which a temperature is highest in a cylinder before combustion of the engine; a combustion start timing calculation step of calculating a combustion start timing of the engine based on the temperature of the highest temperature portion; a lowest temperature portion temperature calculation step of calculating a temperature of a lowest temperature portion based on the operating condition and the combustion start timing, the lowest temperature portion being a region in which a temperature is lowest in the cylinder of the engine; and a combustion end timing calculation step of calculating a combustion end timing of the engine based on the temperature of the lowest temperature portion, in which the lowest temperature portion temperature calculation step calculates a temperature of a wall surface layer portion based on state changes in a burned portion in which combustion has occurred, an unburned portion in which combustion has not yet occurred, and the wall surface layer portion located near a wall surface in the cylinder, and applies the temperature of the wall surface layer portion as the temperature of the lowest temperature portion. Particularly, the burned portion, the unburned portion, and the wall surface layer portion constituting an inside of the engine or an inside of a cylinder of the engine.
In the present invention configured as described above, the combustion start timing is calculated based on the temperature of the highest temperature portion before combustion in the cylinder and the combustion end timing is calculated based on the temperature of the lowest temperature portion in the cylinder. As a result, the combustion start timing can be precisely calculated based on the temperature of the highest temperature portion in which combustion first occurs in the cylinder and the combustion end timing can be precisely calculated based on the temperature of the lowest temperature portion in which combustion occurs last in the cylinder.

In addition, in the present invention, the temperature of the wall surface layer portion as the lowest temperature portion is calculated based on state changes in the burned portion, the unburned portion, and the wall surface layer portion constituting the inside of the cylinder. According to the present invention described above, the combustion state of the engine in transient operation, specifically, the combustion start timing and the combustion end timing can be accurately predicted. In particular, according to the present invention, the combustion end timing in transient operation can be accurately predicted by properly taking, for example, the cooling loss in the wall surface layer portion in the cylinder into consideration.

In the present invention, preferably, the lowest temperature portion temperature calculation step calculates the temperature of the wall surface layer portion as the temperature of the lowest temperature portion based on volume changes that correspond to pressure changes due to combustion progress in the cylinder in the burned portion, the unburned portion, and the wall surface layer portion.

In the present invention configured as described above, the temperature of the wall surface layer portion as the lowest temperature portion can be accurately calculated based on volume changes that correspond to pressure changes due to combustion progress in the burned portion, the unburned portion, and the wall surface layer portion.

In the present invention, preferably, the combustion end timing calculation step calculates the combustion end timing by performing Livengood-Wu integration on the temperature of the lowest temperature portion.

In the present invention configured as described above, the combustion end timing can be precisely calculated by performing Livengood-Wu integration on the temperature of the lowest temperature portion.

In the present invention, preferably, the highest temperature portion temperature calculation step calculates a temperature of a central portion in the cylinder of the engine as the temperature of the highest temperature portion.

Since the central portion in the cylinder is often the highest temperature portion before combustion of the engine, the temperature of the central portion in the cylinder can be obtained as the temperature of the highest temperature portion in the present invention described above.

In the present invention, preferably, the highest temperature portion temperature calculation step calculates the temperature of the highest temperature portion based on a change in a cylinder pressure of the engine and a cylinder temperature before combustion included in the operating condition, and the combustion start timing calculation step calculates the combustion start timing by performing Livengood-Wu integration on the temperature of the highest temperature portion.

In the present invention configured as described above, the combustion start timing can be precisely calculated by calculating the temperature of the highest temperature portion based on changes in the cylinder temperature and the cylinder pressure before combustion and performing Livengood-Wu integration on this highest temperature portion.

In the present invention, preferably, the method further includes an ignition delay calculation step of calculating an ignition delay in the cylinder based on an amount of exhaust gas reintroduced into the cylinder of the engine, in which the combustion start timing calculation step and the combustion end timing calculation step calculate the combustion start timing and the combustion end timing, respectively, in consideration of the ignition delay.

In the present invention configured as described above, the combustion start timing and the combustion end timing can be calculated more accurately by calculating at least the ignition delay caused by the amount of internal EGR gas and taking this ignition delay into consideration.

Particularly, the wall surface layer portion is a portion located in the outer edge portion in the cylinder and surrounded by the cylinder head.

Further particularly, the thickness of the wall surface layer portion is a constant value determined according to the initial conditions throughout a cycle or a combustion cycle.

Further particularly, the method including obtaining temperature history based on volume changes according to pressure changes due to the progress of combustion in the cylinder in the burned portion, the unburned portion, and the wall surface layer portion.

Further particularly, the temperature history is obtained while taking gas exchange and heat exchange between the burned portion, the unburned portion, and the wall surface layer portion into consideration.

Further particularly, the combustion of the engine is homogeneous-charge compression ignition combustion.

Further particularly, the engine is configured to perform homogeneous-charge compression ignition combustion.

Further particularly, the device includes a processing device configured to execute the above method.

Further particularly, a computer program product includes computer-readable instructions which, when loaded and executed on the above processing device, perform the above method.

Further particularly, the above method is used for developing or analyzing an engine.

[Advantage]

According to the present invention, the combustion state of the engine in transient operation can be accurately predicted.

[Brief Description of the Drawings]

[Fig. 1] Fig. 1 is a schematic structure diagram illustrating a computer device, which is an example of the execution subject of a method for predicting the combustion state of an engine according to an embodiment of the present invention.
[Fig. 2] Fig. 2 illustrates a specific example of the valve profiles of an intake valve and an exhaust valve in an HCCI operation.
[Fig. 3] Fig. 3 illustrates the combustion start timing and the combustion period with respect to the number of revolutions of the engine and the indicated mean effective pressure obtained in an experiment.
[Fig. 4] Fig. 4 illustrates the combustion timings of MFB10 and MFB90 according to the cylinder temperature and the cooling water temperature.
[Fig. 5] Fig. 5 illustrates a specific example of the valve profiles of the intake valve and the exhaust valve used in simulated transient operation.
[Fig. 6] Fig. 6 illustrates IMEP, MFB10, MFB90, and the wall temperatures of the cylinder head and the cylinder liner obtained by the simulated transient operation.
[Fig. 7] Fig. 7 illustrates the combustion periods with respect to the combustion start timings at 2000 rpm and 4000 rpm.
[Fig. 8] Fig. 8 illustrates the gas temperature distributions in the bore direction immediately before ignition at 2000 rpm and 4000 rpm.
[Fig. 9] Fig. 9 illustrates the results of calculation of the ignition delay in a constant volume field using the reaction model.
[Fig. 10] Fig. 10 illustrates the results of comparison between the combustion start timings of an engine experiment and a model.
[Fig. 11] Fig. 11 is an explanatory diagram illustrating a burned portion, an unburned portion, and a wall surface layer portion used in the embodiment of the present invention.
[Fig. 12] Fig. 12 illustrates the temperatures and the Livengood-Wu integral values of the burned portion, the unburned portion, and the wall surface layer portion obtained in the embodiment of the present invention.
[Fig. 13] Fig. 13 is a flowchart illustrating the method for predicting the combustion state of an engine according to the embodiment of the present invention.
[Fig. 14] Fig. 14 illustrates the relationship between the combustion periods of MFB10 to MFB90 and the combustion timings of MFB10 at 2000 rpm and 4000 rpm obtained in the embodiment of the present invention.
[Fig. 15] Fig. 15 illustrates the relationship between the combustion timings of MFB10, MFB50, and MFB90 and the wall temperature of a combustion chamber obtained in the embodiment of the present invention.
[Fig. 16] Fig. 16 illustrates MFB10, MFB90, and the wall temperatures of the cylinder head and the cylinder liner under a transient condition obtained in the embodiment of the present invention.

[Embodiments for Carrying Out the Invention]

A method for predicting or calculating the combustion state of an engine according to an embodiment of the present invention will be described below with reference to the attached drawings. All of the features as shown in the drawings may not necessarily be essential.

<Computer device>

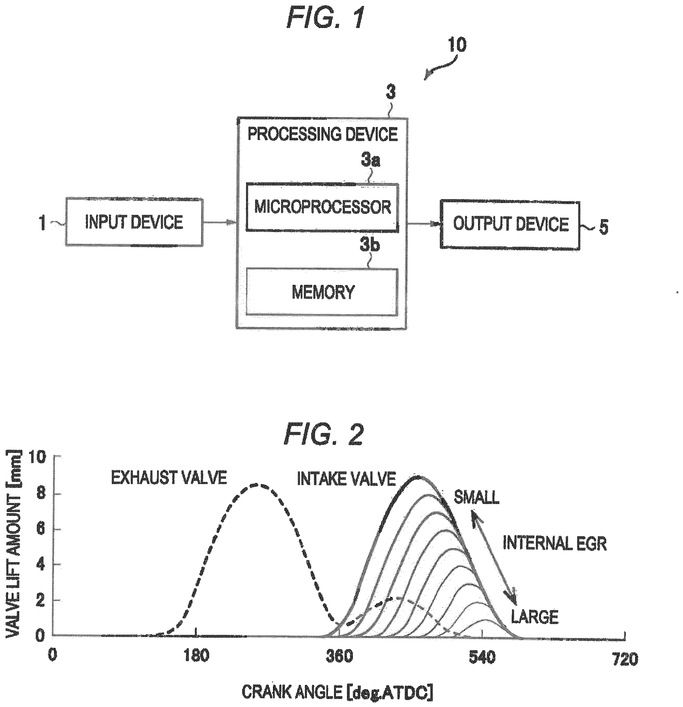

First, a computer device, which is an example of the execution subject of the method of predicting or calculating the combustion state of an engine according to the embodiment of the present invention, will be described with reference to Fig. 1. As illustrated in Fig. 1, a computer device 10 includes an input device 1 by which a user or the like inputs information, a processing device 3 that processes various types of information, and an output device 5 that outputs information.
The input device 1 is, for example, a mouse, a keyboard, a touch panel, a microphone, or the like and the output device 5 is a display device, a speaker, or the like. The processing device 3 includes one or more microprocessors 3a as a CPU (central processing unit) that executes a program, and a memory 3b that includes, for example, a RAM (random access memory) and a ROM (read only memory) and stores the program and/or data.

The method of predicting or calculating the combustion state of an engine according to the embodiment, that is, the model for predicting or calculating the combustion state of an engine constructed by the inventors of the present application described later, is particularly executed by the processing device 3 of the computer device 10. Specifically, the program corresponding to this model is .stored in the memory 3b of the processing device 3, and the microprocessor 3a of the processing device 3 reads this program from the memory 3b and executes the program.

<Basic concept>

Next, the basic concept in the embodiment of the present invention will be described.

Conventionally, high thermal efficiency due to high dilution is known to have the potential to contribute to suppression of CO2 emissions during travel of a vehicle in homogeneous-charge compression ignition (HCCI) combustion. However, the scope of application of HCCI combustion may be limited to partial loads from the viewpoint of NOx emissions and spark ignition (SI) combustion at a stoichiometric mixture ratio may be performed at high loads.

The amount of working gas in the engine cylinder differs greatly between HCCI combustion and SI combustion even under the same load. In addition, the combustion speed of HCCI combustion is strongly influenced by the state quantity and the gas composition. In contrast, during travel of a vehicle, the number of revolutions of the engine (i.e., the speed of the engine) and the loads change from moment to moment. To maximize the advantages of HCCI combustion in a changing operating environment, it is necessary to immediately determine the appropriate combustion mode and perform a device operate for controlling the working gas. Accordingly, control development that takes combustion and device characteristics into consideration is important.

In recent years, model-based development (MBD) using MILS (model in the loop simulation) has been introduced in the control development of internal combustion engines (see, for example, Yuu Shinkai et al., "Development of Empirical Statistical Engine Model and System Validation Method for Variable Compression Ratio Engine", Society of Automotive Engineers of Japan, Inc. 2017 Autumn Meeting 20176212 (2017)). The plant model, which is the control target of MILS, needs to reproduce an actual machine, but individual elements tend to be treated as simple measurement value maps or statistical formulas to reduce calculation loads because the entire engine system is modeled. These are often based on the steady operation measurement of the actual machine. The cylinder environment during transient operation is expected to be different from the cylinder environment in steady operation, and HCCI combustion, which is likely to be influenced by this, needs be treated as a theoretical model.

Here, many reports concerning the modeling of HCCI combustion have been made. A group in Michigan University has reproduced the combustion period with reaction calculation with multiple zones (see Development of a Two-Zone HCCI Combustion Model Accounting for Boundary Layer Effects, S.B. Fiveland et.al, SAE2001-01-1028 (2001)) and improved the reproduction accuracy using a distribution function (see Refinement and Validation of the Thermal Stratification Analysis: Apost-processing methodology for determining temperature distributions in an experimental HCCI engine, B. Lauler et.al, SAE2014-01-1276 (2014)). In addition, Ogink et al. have coupled 0D/1D engine simulation and detailed reaction calculation and reproduced the actual machine including gas exchange processes (see Gasoline HCCI Modeling: An Engine Cycle Simulation Code with a Multi-Zone Combustion Model, R.Ogink et.al, SAE 2002-01-1745 (2001)). For detailed reaction calculation with high calculation loads, Kang et al. (see J.M. Kang, "Concept and Implementation of a Robust HCCI Engine Controller", SAE2009-01-1131) and Kuboyama et al. (see T.Kuboyama et al., "A Study of Control Strategy for Combustion Mode Switching Between HCCI and SI with the Blowdown Supercharging System", SAE2012-01-1122 (2012)) have expressed the combustion period with the Arrhenius type. There are various methods, but all of them express the gas composition, the pressure, and the temperature in the cylinder from the viewpoint of utilizing the exhaust heat in the next cycle via the internal EGR and predict not only the ignition timing but also the combustion period. However, in application in transient operation, the handling of detailed reactions requires high computational loads and it is uncertain whether the Arrhenius type can support transient state quantity changes.

Accordingly, the inventors of the present application have thought or developed the modeling of HCCI combustion to be applied to a MILS plant model, assuming the development of combustion control during transient operation. Specifically, the inventors of the present application have grasped the steady characteristics and the changes in load transient operation by measuring a single-cylinder engine, analyzed the features using CFD and detailed reaction calculation based on the results thereof, and constructed a model for predicting or calculating the combustion start timing (ignition timing) and the combustion end timing of HCCI combustion based on the obtained knowledge.

<Extraction of important factors by an experiment and analysis>

Next, the experiment and analysis for extracting the influencing factors performed by the inventors of the present application before construction of the model will be described.

(Grasping the characteristics by a steady operation experiment)

The inventors of the present application have investigated the basic characteristics of combustion using a single-cylinder engine for test. Table 1 illustrates the specifications of the engine used. The compression ratio is 17.0, and any valve profiles can be set for the intake valve and exhaust valve by a hydraulically driven valve system. In order to focus on changes in the wall temperature as a transient effect, thermocouples are inserted into many positions (14 points for the cylinder head and six points for the cylinder liner) in the cylinder head and the cylinder liner of the engine, and the temperatures of the portions 1 mm away from the wall surface have been measured.

[Table 1]

| Engine type | Four-stroke four-valve engine |
|---|---|
| Number of cylinders | 1 |
| Piston displacement (cc) | 499 |
| Bore × stroke (mm) | 83.5 × 91.2 |
| Compression ratio | 17.0 |
| Fuel type | Gasoline (96 RON) |
| Valve system | Hydraulic driven |

Fig. 2 illustrates a specific example of the valve profiles of the intake valve and the exhaust valve when an HCCI operation is performed. In Fig. 2, the horizontal axis represents the crank angle and the vertical axis represents the valve lift amounts of the intake valve (a plurality of solid lines) and the exhaust valve (dotted line). As illustrated in Fig. 2, the exhaust valve is opened twice and the intake valve is operated by a mechanism capable of continuously changing the lift amount and the working angle. By changing the overlap amount between the intake valve and the exhaust valve by changing the lift amount of the intake valve, the amount of exhaust gas (internal EGR amount) reintroduced into the cylinder of the engine is adjusted. In the experiment, for any number of revolutions of the engine and any fuel injection amount, after the combustion noise is applied as the restriction, the valve profile of the intake valve that maximizes the thermal efficiency was selected. Table 2 illustrates the experimental conditions. The basic characteristics were measured based on a cooling water temperature of 90°C and the effects of the change in the wall temperature on the heat generation timing were investigated when the cooling water temperature was lowered to 40°C.

[Table 2]

| Number of revolutions of engine | 1000, 2000, 3000, 4000 |
|---|---|
| Fuel injection amount (mg/cycle) | Up to 13 |
| Internal EGR rate (%) | Up to 80 |
| Cooling water temperature (deg.C) | 40, 50, 70, 90 |
| Restriction | CN < 85 dB or COV < 5% |

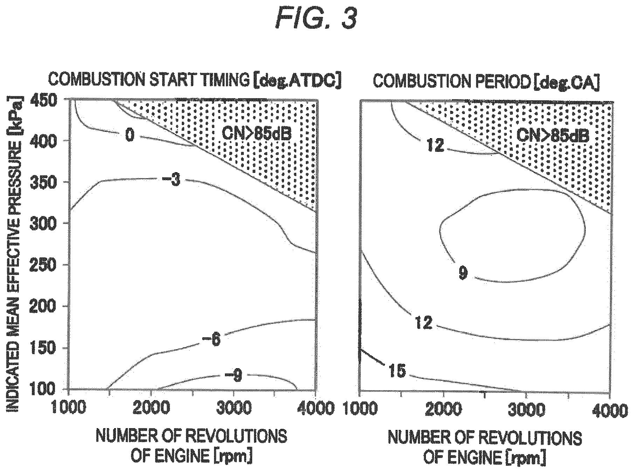

Fig. 3 illustrates the combustion start timing and the combustion period with respect to the indicated mean effective pressure (IMEP) corresponding to the number of revolutions of the engine and the engine load obtained by the experiment. The combustion start timing is indicated by isolines in the left portion of Fig. 3 and the combustion period is indicated by isolines in the right portion of Fig. 3. It can be seen from the left portion of Fig. 3 that the combustion start timing is earlier under a lower load and the combustion start timing is later under a higher load. In addition, it can be seen from the right portion of Fig. 3 that the combustion period is longer under a lower load and the combustion period is shorter under a higher load. Specifically, the combustion period is the shortest under a load close to 300 kPa and the combustion period becomes longer under a load higher than 300 kPa. Since the dilution rate is high and the combustion period is long under a low load, the combustion start timing was advanced by increasing the internal EGR amount and raising the cylinder temperature. In contrast, since the dilution rate is lower and the combustion period is shorter as the load increases, the position of the barycenter of combustion was optimized by reducing the internal EGR amount and delaying the combustion start timing. On the other hand, when the load is 300 kPa or higher, the heat generation was retarded by further reducing the internal EGR amount to avoid restrictions about combustion noise.

Both the ignition timing and the combustion period are less sensitive to changes in the number of revolutions of the engine. When combustion determines the rate of the chemical reaction, since the combustion period is longer in a higher revolution range in which the actual time is shorter, the effects of other factors are suggested.

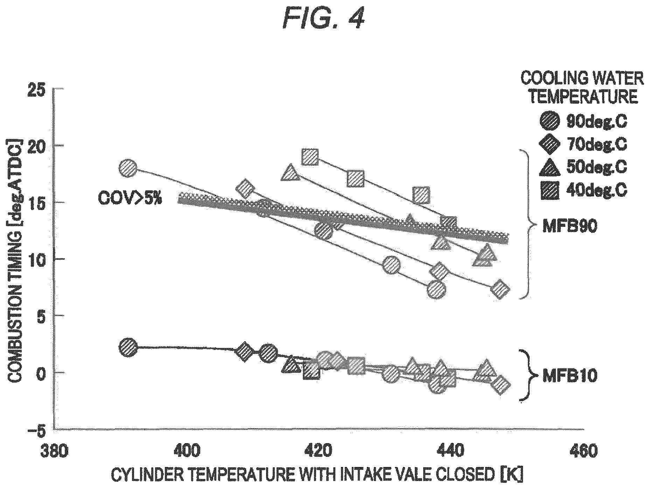

Fig. 4 illustrates the combustion timing at a mass fraction burn of 10% (MFB10) and the combustion timing at a mass fraction burn of 90% (MFB90) according to the cylinder temperature and the cooling water temperature with the intake valve closed when the cylinder temperature is changed by the internal EGR amount under the conditions of 2000 rpm and 300 rpm. It should be noted here that MFB stands for "mass fraction burn", MFB10 is roughly equivalent to the combustion start timing in the cylinder, and MFB90 is roughly equivalent to the combustion end timing in the cylinder.

As illustrated in Fig. 4, both MFB10 and MFB90 are more advanced as the cylinder temperature is higher. In addition, when the cylinder temperature changes by 10°C, MFB10 changes by less than 1 deg.CA and MFB90 changes by approximately 3 deg.CA. Accordingly, MFB90 changes larger than MFB10. On the other hand, when the cooling water temperature is changed, MFB10 hardly changes if the cylinder temperature is the same, but MFB90 is more retarded as the cylinder temperature is lower. In addition, Fig. 4 also illustrates MFB90 lines for individual water temperatures when the volatility of IMEP is "COV (coefficient of variation) > 5%" as the constraint about combustion stability. It can be seen that the COV constraint is located near 13 deg.ATDC for MFB90 and the cylinder temperature needs to be higher as the water temperature is lower to obtain stable combustion. For this reason, MFB90 is influenced by the water temperature and can be evaluated as an index of combustion stability.

(Simulated operation of load transient)

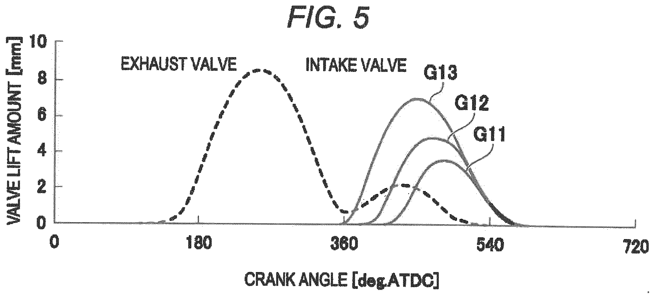

Next, the inventors of the present application have performed simulated load transient operation with a single-cylinder engine to extract the difference between steady operation and transient operation. The number of revolutions was fixed to 2000 rpm and the fuel injection amount was increased to the amount corresponding to an IMEP of 400 kPa during steady operation at an IMEP of 100 kPa. Fig. 5 illustrates the valve profiles used in this simulated transient operation. The valve profiles indicated by curves G11 and G13 are the steady settings at an IMEP of 100 kPa and an IMEP of 400 kPa. The valve profile indicated by curve G12 was used only in the first cycle in which the fuel injection amount was increased. The exhaust energy at an IMEP of 100 kPa was lower than that at an IMEP of 400 kPa, and the internal EGR amount in steady operation at an IMEP of 400 kPa causes misfire because the cylinder temperature is too low. Accordingly, by sandwiching the valve profile indicated by curve G12 between an IMEP of 100 kPa and an IMEP of 400 kPa, the internal EGR amount was temporarily increased to continue HCCI combustion. It should be noted here that the cooling water temperature is constant at 90°C.

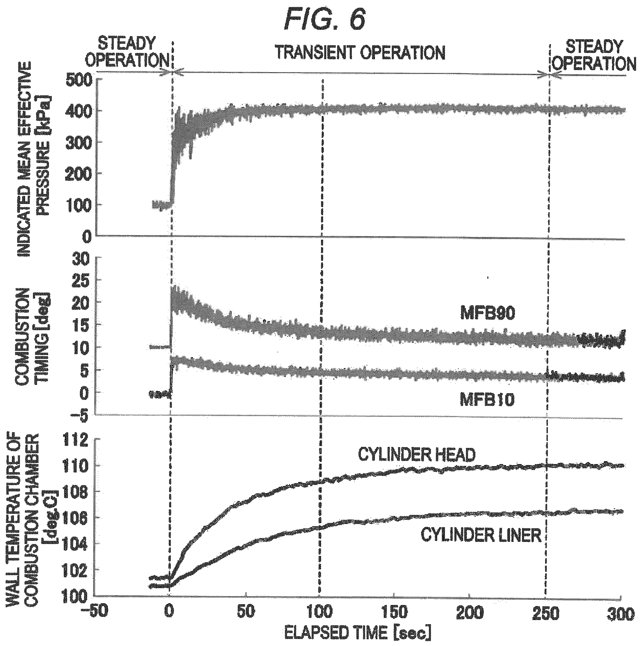

Fig. 6 illustrates chronological changes in IMEP, MFB10, MFB90, and the wall temperatures (specifically, the wall temperatures of the cylinder head and the cylinder liner) inside the cylinder in the simulated transient operation described above. The valve profile indicated in curve G12 in Fig. 5 is applied in the cycle at second 0 in Fig. 6 and an increase in the fuel amount is started. IMEP reaches approximately 300 kPa immediately after the increase in the fuel amount is started, gradually increases, and reaches 400 kPa after a lapse of approximately 80 seconds. For MFB10 and MFB90, MFB10 becomes steady first and MFB90 becomes steady later. The wall temperatures vary depending on the location, but becomes stable after a lapse of approximately 250 seconds regardless of the location. Changes in MFB90 are similar to such changes in the wall temperatures and it was suggested that MFB90 and the wall temperature have a causal relationship.

Assuming the actual usage environment of a vehicle, the vehicle is rarely operated with the number of revolutions of the engine and the engine load constant. The engine is often used in transient operation (transition process environment) as illustrated in Fig. 6 and, if HCCI combustion is applied at this time, the heat generation timing becomes different from that in steady operation. Accordingly, it is not appropriate to use a model that is based on steady operation data as described above in the development of MBD control of HCCI combustion.

The inventors of the present application have tried to understand the phenomenon using numerical analysis, focusing on "low dependence of the combustion period on the number of revolutions" and "the relationship between the wall temperature and the combustion end timing", which are characteristic behaviors obtained from the engine experiment, to extract the influencing factors to be considered in the modeling of HCCI combustion.

(Extraction of influencing factors using detailed numerical analysis)

As described above, the combustion period hardly changed even if the number of revolutions of the engine changed in the engine experiment. Accordingly, the inventors of the present application have tried to reproduce the behaviors using a predetermined multi-zone engine model. The region inside the cylinder was divided into 100 regions with the same volume concentrically with the central axis of the bore, and the wall surface heat loss ratios were given to the individual regions. By obtaining the heat flux distribution in advance based on the 3D-CFD calculation, the wall surface heat loss ratios were assigned to the individual regions. In the multi-zone engine model, the ratios at which the heat transfer coefficient and the total heat loss amount based on the difference between the cylinder average gas temperature and the wall temperature by the Woschni equation are given to the individual regions are applied and considered. S5R (see Akira Miyoshi et al., "Construction of a Detailed Kinetic Model for Gasoline Surrogate Mixtures, Transactions of Society of Automotive Engineers of Japan", Vol.48, No.5, pp.1021-1026 (2017)) was used as the reaction model.

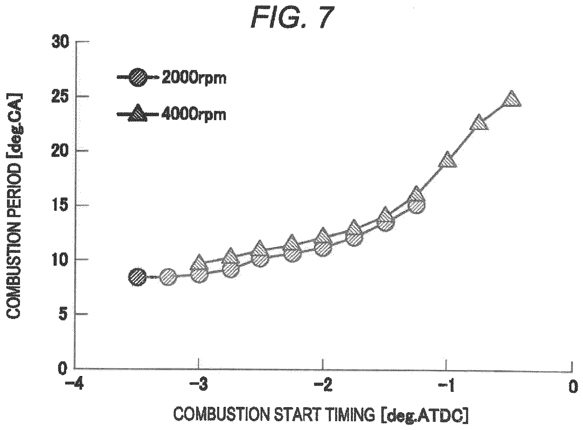

Fig. 7 illustrates changes in the combustion period with respect to the combustion start timing when calculation was performed while the compression start temperature was changed with 2000 rpm and 4000 rpm used as the number of revolutions of the engine. It can be seen from Fig. 7 that the combustion period is longer as the combustion start timing is slower, while the combustion period when the number of revolutions of the engine is 2000 rpm is substantially the same the combustion period when the number of revolutions of the engine is 4000 rpm. Accordingly, it was found that the dependence of the combustion period on the number of rotations is small as in the actual machine results described above.

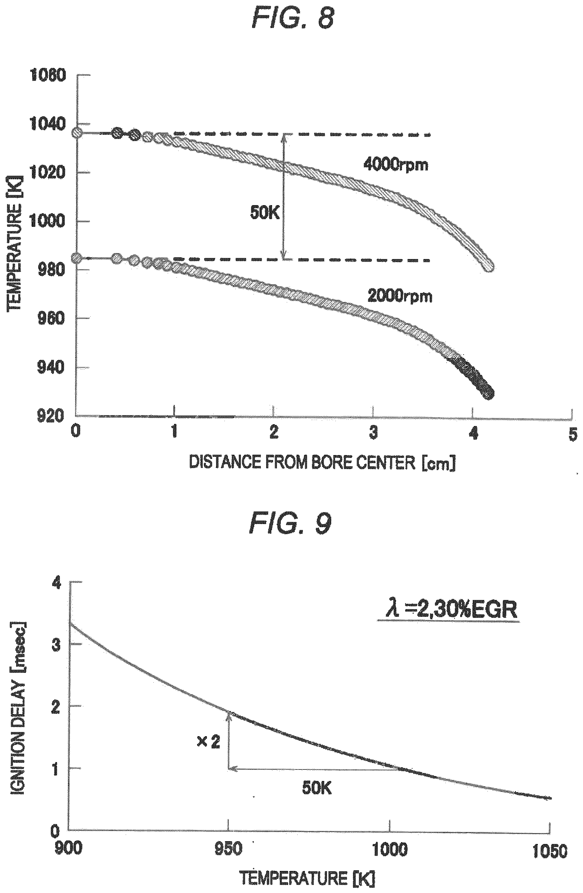

Fig. 8 illustrates the gas temperature distributions in the bore direction at -5 deg.ATDC immediately before ignition under the condition that the ignition timing is -2 deg.ATDC. It can be seen from Fig. 8 that the central portion is the highest in the cylinder and the temperature is lower toward the outer circumference in the cylinder. It can also be seen that the temperature when the number of revolutions of the engine is 4000 rpm is approximately 50K higher than the temperature when the number of revolutions of the engine is 2000 rpm. In contrast, the temperature gradient in the bore direction when the number of revolutions of the engine is 2000 rpm is similar to the temperature gradient in the bore direction when the number of revolutions of the engine is 4000 rpm. Fig. 9 illustrates the results of calculation of the ignition delay in a constant volume field using the reaction model (multi-zone engine model) described above. It can be seen from Fig. 9 that the reaction time is approximately doubled when there is a temperature difference of 50K in the temperature range indicated in Fig. 8. As a result, it can be interpreted that the actual time difference due to the number of revolutions is cancelled by the temperature.

Here, in the cylinder of the engine, the first combustion occurs in the central portion in the cylinder in which the temperature is high and the last combustion occurs in the outer edge portion in the cylinder in which the contact area with the wall surface is large and the temperature is the lowest. Local combustion is completed quickly, the combustion period is significantly influenced by the temperature distribution in the cylinder, and the temperature distribution is characterized by the heat loss on the wall surface. In the engine experiment, it is explained that large changes in the combustion end timing due to changes in the cooling water temperature and the wall temperature during transition are directly influenced by the temperature of the vicinity of the wall surface on which the last combustion occurs. Accordingly, the inventors of the present application have thought that what should be considered in the modeling of HCCI combustion is the influencing factor of combustion in the region near the wall surface in which last combustion occurs, and the combustion end timing can be identified if the timing of the combustion is found.

<Construction of a combustion model>

The inventors of the present application have constructed a model of HCCI combustion based on the findings obtained as described above.

(Concept of a combustion model)

In the concept of the model according to the embodiment, the combustion start timing and the combustion end timing are particularly defined by obtaining the state quantity changes from the compression process to the expansion process in the highest temperature portion and the lowest temperature portion in the cylinder and performing Livengood-Wu integration (see "Correlation of Autoignition Phenomenon in Internal Combustion Engines and Rapid Compression Machines", Livengood, J.C., and Wu, P.C., Proceedings of Fifth International Symposiumon Combustion, p.347, Reinhold, (1955)) on these changes. It should be noted here that the period between the combustion start timing and the combustion end timing is the combustion period.

First, the highest temperature portion in the cylinder is particularly obtained by obtaining the cylinder pressure history from 0-dimensional cycle calculation that takes the heat loss on the wall surface into consideration using the Woschni equation, and calculating equation (1) by using the cylinder pressure and the initial temperature (typically, the cylinder temperature when the intake valve is closed). Typically, the highest temperature portion in the cylinder is the bore central portion in the cylinder or the insulating portion (referred to below as the "heat insulating core portion") located near the bore central portion. In equation (1), "$T_{adian}$" indicates the temperature of the heat insulating core portion, "P" indicates the cylinder pressure, and "$\kappa$" indicates the specific heat ratio. In the embodiment, the combustion start timing is particularly obtained based on the temperature of the heat insulating core portion, which is the highest temperature portion in the cylinder as described above.

$$T_{adia,n} = T_{adia,n-1} * \left(\frac{P_n}{P_{n-1}}\right)^{\frac{\kappa_{adia}-1}{\kappa_{adia}}} \quad \text{Equation (1)}$$

Next, the lowest temperature portion in the cylinder is compressed before combustion occurs by a pressure rise due to the burned portion, which is the portion in which combustion has occurred in the cylinder. In order to take the effect of this compression into consideration, the inside of the cylinder of the engine is particularly divided into the burned portion (region in which combustion has occurred), an unburned portion (region in which combustion has not yet occurred), and the wall surface layer portion (region located near the wall surface in the cylinder), and the physical quantity (especially, the temperature) of the wall surface layer portion, which is the lowest temperature portion in the cylinder, is derived. In the embodiment, the combustion end timing is obtained from the temperature of the wall surface layer portion described above.

(Ignition delay model)

In the model according to the embodiment, Livengood-Wu integration is particularly used to predict the combustion start timing and the combustion end timing. In the embodiment, with the assumption that the model is operated while the internal EGR amount is changed in a wide operating range including a transient, the ignition delay $\tau_{ing}$ is calculated by equation (2) in consideration of the influencing factors. The Livengood-Wu integral value I of this ignition delay $\tau_{ing}$ is represented by equation (3).

$$\tau_{ign} = a * P^b * \left(YF_{CO_2} + YF_{H_2O}\right)^c * YF_{O_2}^d * YF_{fuel}^e * \exp\left(\frac{f}{T}\right) \quad \text{Equation (2)}$$

$$I = \int \frac{1}{\tau_{ign}} d\theta \quad \text{Equation (3)}$$

Equation (2) particularly represents the reaction time and indicates a model for evaluating how much the reaction proceeds at intervals of predetermined crank angles (for example, 0.1 deg.CA). In equation (2), "P" represents the pressure, "YF" represents the mole fractions of $CO_2$, $H_2O$, $O_2$, and the fuel, "T" represents the temperature, and "a" to "f" indicate model constants. The values of "a" to "f" were determined by performing detailed reaction calculation of a total of 6804 conditions in a matrix form using the parameters (typically, including the internal EGR amount (EGR rate)) illustrated in Table 3. In the embodiment, the combustion start timing and the combustion end timing are particularly obtained in consideration of the ignition delay $\tau_{ing}$ calculated by the equation (2) determined as described above. For example, the ignition delay $\tau_{ing}$ is applied to the Livengood-Wu integration for obtaining the combustion start timing and the Livengood-Wu integration for obtaining the combustion end timing.

[Table 3]

| Temperature (K) | 600, 750, 800, 850, 875, 900, 925, 950, 975, 1000, 1050, 1100, 1150, 1200 |
|---|---|
| Pressure (bar) | 10, 30, 60, 90, 120, 150 |
| Equivalence ratio | 0.2, 0.3, 0.4, 0.5, 0.6, 0.7, 0.8, 0.9, 1.0 |
| EGR rate (%) | 0, 10, 20, 30, 40, 50, 60, 70, 80 |

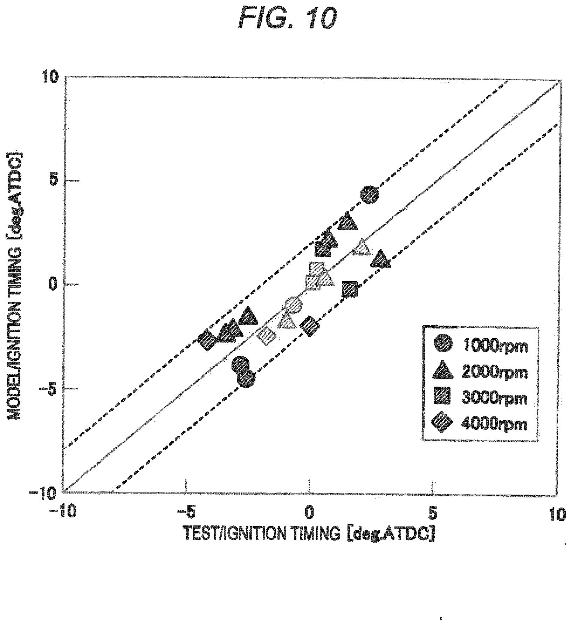

Fig. 10 illustrates the results of comparison with the ignition timing (combustion start timing) of the engine experiment after applying equation (2) to Livengood-Wu integration. In comparison in steady operation, a prediction accuracy of ±2 deg was obtained when the number of revolutions of the engine is 1000, 2000, 3000, and 4000 rpm.

(Combustion end timing model)

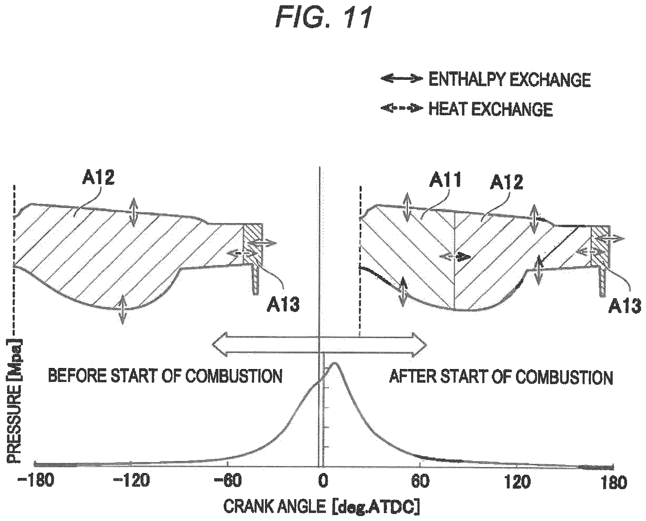

Next, the three regions (specifically, the burned portion, the unburned portion, and the wall surface layer portion) that constitute the inside of the cylinder of the engine will be described with reference to Fig. 11.
As illustrated in Fig. 11, there are only two regions (that is, an unburned portion UB (A12) and a wall surface layer portion LY (A13)) in the cylinder before the start of combustion, but a burned portion BN (A11) is generated concurrently with the start of combustion, whereby there are three regions: the burned portion BN, the unburned portion UB, and the wall surface layer portion LY.

The wall surface layer portion LY is particularly a portion located in the outer edge portion in the cylinder and surrounded by the cylinder head, the cylinder liner, and the piston that face the combustion chamber (the space formed in the cylinder for combustion). That is, the wall surface layer portion LY is particularly a cylindrical region that extends along the cylinder liner and is located inside the cylinder liner.

It should be noted here that the thickness of the wall surface layer portion LY is particularly a constant value determined according to the initial conditions throughout the cycle.

In addition, the portion illustrated in Fig. 11 does not need to be used as the wall surface layer portion LY. In short, a region that is located near the wall surface and that is the lowest temperature portion in the cylinder only needs to be used.

On the other hand, as the combustion progresses, the burned portion BN increases and the unburned portion UB reduces. Then, substance exchange is performed during combustion between the burned portion BN and the unburned portion UB and between the unburned portion UB and the wall surface layer portion LY. In addition, the burned portion BN, the unburned portion UB, and the wall surface layer portion LY performs heat exchange with the wall surfaces that make contact during combustion.

In the model according to the embodiment, based on volume changes according to pressure changes due to the progress of combustion in the cylinder in the burned portion BN, the unburned portion UB, and the wall surface layer portion LY, the temperature history of the individual regions (i.e., the burned portion BN, the unburned portion UB, and the wall surface layer portion LY) is particularly obtained while taking the gas exchange and the heat exchange between these regions into consideration.

Particularly, the basic equations indicating the states of the burned portion BN, the unburned portion UB, and the wall surface layer portion LY are defined by the following equations (4) to (13).

$$\frac{dT_{BN}}{d\theta} = \frac{\frac{dQ_{burn}}{d\theta} + \frac{dQ_{loss\ BN}}{d\theta} - PdV_{BN} + \frac{dm_{BN-UB}}{d\theta}(u_x - u_{BN} + RT_{BN})}{m_{BN} * cv_{BN}} \qquad \text{Equation (4)}$$

$$V_{BN} = C_{exp} * XB * V_{total} \qquad \text{Equation (5)}$$

$$\frac{dQ_{loss\ BN}}{d\theta} = \frac{dQ_{loss\ total}}{d\theta} - \frac{dQ_{loss\ UB}}{d\theta} - \frac{dQ_{loss\ LY}}{d\theta} \qquad \text{Equation (6)}$$

$$\frac{dT_{UB}}{d\theta} = \frac{\frac{dQ_{loss\ UB}}{d\theta} - PdV_{UB} + \frac{dm_{UB-BN}}{d\theta}(u_x - u_{UB} + RT_{UB}) + \frac{dm_{UB-LY}}{d\theta}(u_y - u_{UB} + RT_{UB})}{m_{LY} * cv_{UB}} \qquad \text{Equation (7)}$$

$$V_{UB} = V_{total} - V_{BN} - V_{LY} \qquad \text{Equation (8)}$$

$$\frac{dQ_{loss\ UB}}{d\theta} = h * \{A_{head} * (T_{head} - T_{UB}) + A_{piston} * (T_{piston} - T_{UB})\} \qquad \text{Equation (9)}$$

$$\frac{dT_{LY}}{d\theta} = \frac{\frac{dQ_{loss\ LY}}{d\theta} - PdV_{LY} + \frac{dm_{LY-UB}}{d\theta}(u_y - u_{LY} + RT_{LY})}{m_{LY} * cv_{LY}} \qquad \text{Equation (10)}$$

$$V_{LY} = \pi * \left\{ \left(\frac{Bore}{2}\right)^2 - \left(\frac{Bore}{2} - \delta_t\right)^2 \right\} * x_{piston} \qquad \text{Equation (11)}$$

$$\delta_t = f(Ne, Qf, T_{IVC}) \qquad \text{Equation (12)}$$

$$\frac{dQ_{loss\;LY}}{d\theta} = h * A_{liner} * (T_{liner} - T_{LY}) \qquad \text{Equation (13)}$$

Equations (4), (5), and (6) particularly represent the temperature, the volume, and the amount of heat of the burned portion BN, respectively, equations (7), (8), and (9) particularly represent the temperature, the volume, and the amount of heat of the unburned portion UB, respectively, and equations (10), (11), (12), and (13) particularly represent the temperature, the volume, the layer thickness (the length along the movement direction of the piston), and the amount of heat of the wall surface layer portion LY, respectively.

In addition, in the individual equations, "T" represents the temperature, "V" represents the volume, "P" represents the pressure, "R" represents the gas constant, "$\theta$" represents the crank angle, "$Q_{burn}$" represents the amount of heat of combustion, "$Q_{loss}$" represents the amount of heat transferred on the wall surface, "m" represents the amount of substance, "cv" represents the constant volume specific heat, "XB" represents the combustion rate, "u" represents the internal energy, "h" represents the heat transfer coefficient, "A" represents the surface area, "$\delta t$" represents the layer thickness of the wall surface layer portion LY, "Ne" represents the number of revolutions of the engine, "Qf" represents the fuel injection amount, "$T_{IVC}$" represents the cylinder temperature when the intake valve is closed, "Bore" represents the bore diameter, and "$x_{piston}$" represents the piston displacement. The subscripts "BN", "UB", "LY", "piston", "head", and "liner" attached to the individual parameters represent the burned portion, the unburned portion, the wall surface layer portion, the piston, the cylinder head, and the cylinder liner, respectively.

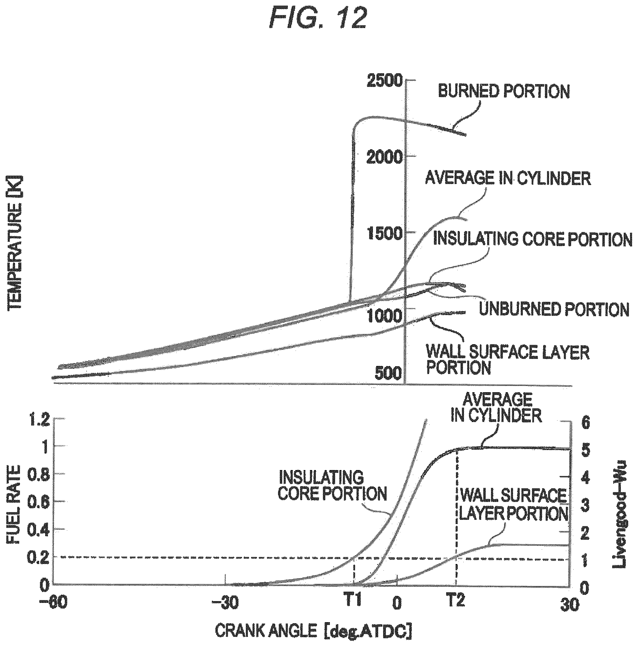

Fig. 12 illustrates the temperatures and Livengood-Wu integral values (corresponding to the combustion rates in the cylinder) of the burned portion BN, the unburned portion UB, and the wall surface layer portion LY obtained by the model according to the embodiment. The upper portion in Fig. 12 further illustrates the average cylinder temperature and the temperature of the heat insulating core portion in addition to the temperatures of the burned portion BN, the unburned portion UN, and the wall surface layer portion LY according to the crank angle. The lower portion in Fig. 12 illustrates the Livengood-Wu integral values of the average cylinder temperature, the temperature of the heat insulating core portion, and the temperature of the wall surface layer portion LY.

In the embodiment, the combustion start timing and the combustion end timing are particularly calculated based on the Livengood-Wu integral value of the temperature of the heat insulating core portion and the Livengood-Wu integral value of the temperature of the wall surface layer portion LY. That is, timing T1 at which the Livengood-Wu integral value of the temperature of the heat insulating core portion reaches 1 is particularly obtained as the combustion start timing and timing T2 at which the Livengood-Wu integral value of the temperature of the wall surface layer portion LY reaches 1 is particularly calculated as the combustion end timing.

(Flowchart)

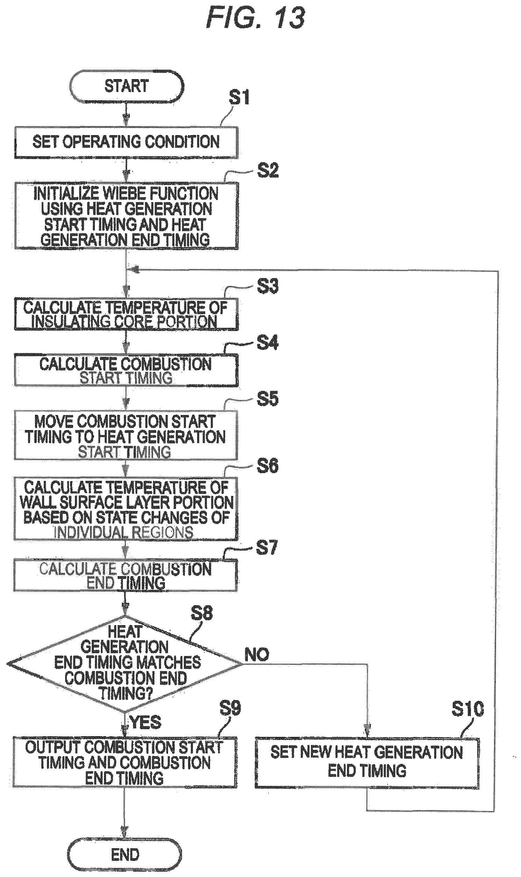

Next, Fig. 13 is a flowchart illustrating the method of predicting or calculating the combustion state of an engine according to the embodiment that is based on the model described above. This flowchart is particularly executed by the processing device 3 of the computer device 10. More specifically, the flowchart is repeatedly executed by the microprocessor 3a in the processing device 3 at a predetermined cycle based on the program stored in the memory 3b.

First, in step S1, the processing device 3 particularly sets the operating condition of the engine to be calculated based on the information input to the input device 1 and the information stored in the memory 3b. Specifically, the processing device 3 sets the number of revolutions of the engine (the engine speed), the fuel injection amount, the EGR rate, the cylinder temperature when the intake valve is closed, the wall temperature before combustion, the gas composition when the intake valve is closed, the cylinder pressure of before combustion, and the like.

Then, in step S2, the processing device 3 particularly initializes the Wiebe function using the heat generation start timing and the heat generation end timing as tentative values. In this case, the processing device 3 particularly obtains the cylinder pressure based on the heat generation rate obtained from the Wiebe function having received the initial values of the heat generation start timing and the heat generation end timing.

Then, in step S3, the processing device 3 particularly calculates the temperature of the heating insulating core portion by substituting the cylinder temperature as the initial temperature set in step S1 and the cylinder pressure calculated in step S2 into equation (1).

Then, in step S4, the processing device 3 particularly calculates the combustion start timing by performing Livengood-Wu integration on the temperature of the heat insulating core portion calculated in step S3. Specifically, the processing device 3 particularly obtains the timing at which the Livengood-Wu integral value of the temperature of the heat insulating core portion reaches 1 as the combustion start timing.

Then, in step S5, the processing device 3 particularly updates the average value of the cylinder pressure calculated by moving the tentative combustion start timing used in step S2 to the heat generation start timing calculated in step S4 and then converges the combustion start timing by repeating this operation.

Then, in step S6, the processing device 3 particularly obtains the state changes in the burned portion BN, the unburned portion UB, and the wall surface layer portion LY by applying the cylinder pressure history converged in step S5 and the values of the operating condition set in step S1 to equations (4) to (13) and calculate the temperature of the wall surface layer portion LY based on this state changes.

That is, the processing device 3 particularly calculates the temperature of the wall surface layer portion LY while taking gas exchange and heat exchange between the individual regions into consideration based on the volume changes that correspond to the pressure changes due to the combustion progress in the cylinder in the burned portion BN, the unburned portion UB, and the wall surface layer portion LY (basically, the temperature can be obtained from the volume and the pressure).

Then, in step S7, the processing device 3 particularly calculates the combustion end timing by performing Livengood-Wu integration on the temperature of the wall surface layer portion LY calculated in step S6.

Specifically, the processing device 3 obtains, as the combustion end timing, the timing at which the Livengood-Wu integral value of the temperature of the wall surface layer portion LY reaches 1.

Then, in step S8, the processing device 3 particularly determines whether the tentative heat generation end timing used in step S2 matches the combustion end timing calculated in step S7.

As a result, when the heat generation end timing matches the combustion end timing (Yes in step S8), the processing device 3 particularly decides to adopt the calculated combustion end timing and outputs the combustion start timing and the combustion end timing from the output device 5 (step S9).

In contrast, when the heat generation end timing does not match the combustion end timing (No in step S8), the processing device 3 particularly proceeds to step S10 and sets a new heat generation end timing. Then, the processing device 3 particularly returns to step S3 and performs the processing of step S3 and the following steps again using this new heat generation end timing. This causes the processing device 3 to search for the heat generation end timing that matches the combustion end timing in a scanning manner and repeats the processing until convergence is achieved.

It should be noted here that, when the heat generation end timing does not match the combustion end timing, the heat generation end timing that is the earliest timing at which the Livengood-Wu integral value does not reach 1 is desirably adopted as the combustion end timing.

<Operation and effect>

Next, the operation and effect of the method for predicting or calculating the combustion state of an engine according to the embodiment described above will be described. Specifically, the results of simulations of steady operation and transient operation using the model according to the embodiment will be described.

(Effect of the number of revolutions)

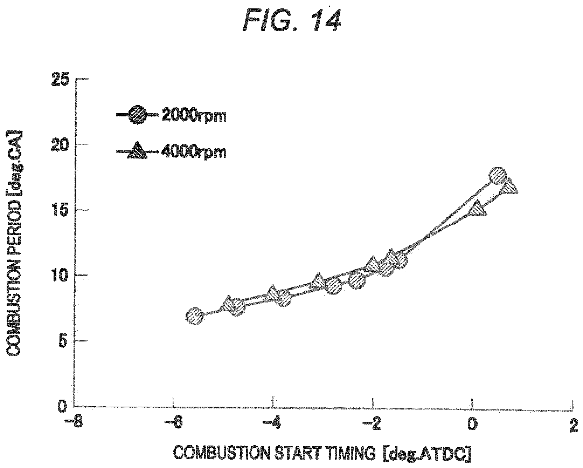

Fig. 14 illustrates the relationship of the combustion period with respect to MFB10 predicted by changing the initial temperature when the number of revolutions (i.e., the speed) of the engine is 2000 rpm and 4000 rpm. It can be seen from Fig. 14 that the combustion period is longer as the combustion start timing (ignition timing) is delayed and, particularly when the combustion start timing is more retarded than -2 deg.ATDC, the amount of change (slope) of the combustion period with respect to the combustion start timing is larger. In addition, since the same value is obtained even if the number of revolutions of the engine changes in the results in Fig. 14, according to the embodiment, the behavior similar to the calculation result by the multi-zone engine model illustrated in Fig. 7 can be reproduced.

(Effect of the wall temperature)

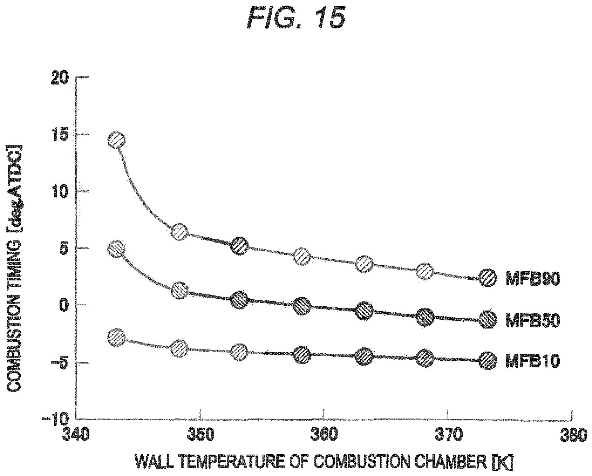

Fig. 15 illustrates the combustion timings of MFB10, MFB50, and MFB90 predicted when the cylinder temperature with the intake valve closed is fixed and the wall temperature of the combustion chamber is used as a parameter. It can be seen from Fig. 15 that the change in MFB10 with respect to the change in the wall temperature is slight, but the change in MFB90 with respect to the change in the wall temperature is remarkable. That is, the above behavior was reproduced because the heat loss on the wall surface was increased due to reduction in the wall temperature and the combustion timing of the wall surface layer portion LY was delayed due to reduction in the temperature of the wall surface layer portion LY. Accordingly, since combustion at a low wall temperature can be predicted in the embodiment, it is possible to determine whether HCCI operation can be performed during warm-up operation, using the model.

(Transient behavior)

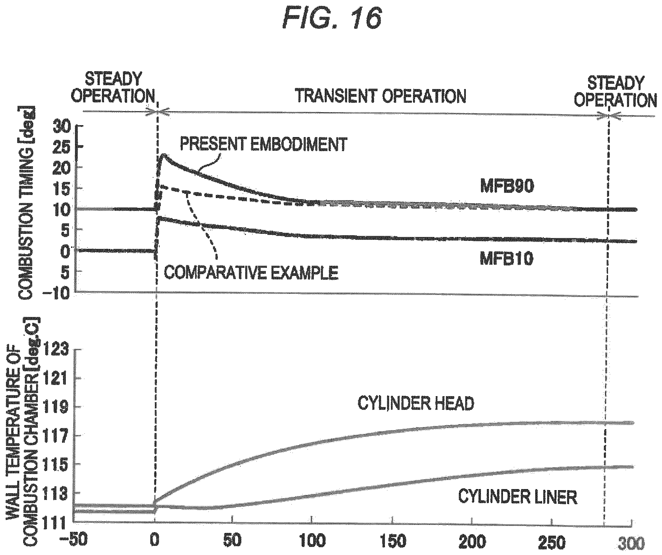

Next, the result of the reproduction calculation of load transient operation will be described. A predetermined engine model including a gas exchange process was used. The cylinder gas composition, the temperature, the pressure, and the wall temperature of the combustion chamber when the intake valve is closed are used as inputs for this model, and the combustion start timing and the combustion end timing predicted based on this were applied to the model. Fig. 16 illustrates MFB10, MFB90, and the wall temperatures of the cylinder head and the cylinder liner as the prediction results of the transient conditions according to the embodiment. In addition, Fig. 16 illustrates MFB90 of Arrhenius type as a comparative example. It can be seen from Fig. 16 that the change in MFB90 illustrated in Fig. 6 can be reproduced more accurately than in the comparative example in the embodiment. That is, the embodiment properly reproduces the behavior concerning heat generation, which makes greatly changes after the load change and it takes time to converge, more properly in MFB90 than in MFB10. In addition, the embodiment properly reproduces that the time until the MFB90 converges substantially matches the timing at which the temperature of the cylinder liner becomes stable.

(Summary)

As described above, the method for predicting or calculating the combustion state of an engine according to the embodiment calculates the combustion start timing based on the temperature of the central portion (heat insulating core portion) in the cylinder, which is the highest temperature portion in the cylinder, and calculates the combustion end timing based on the temperature of the wall surface layer portion LY, which is the lowest temperature portion in the cylinder. In this case, the temperature of the wall surface layer portion LY is calculated based on the state changes in the burned portion BN, the unburned portion UB, and the wall surface layer portion LY that constitute the inside of the cylinder. According to the embodiment described above, it is possible to accurately predict the combustion state of an engine in transient operation, specifically, the combustion start timing and the combustion end timing. In particular, according to the present invention, the combustion end timing in transient operation can be accurately predicted by properly taking, for example, the cooling loss in the wall surface layer portion LY in the cylinder into consideration.

In addition, according to the embodiment, the temperature of the wall surface layer portion LY can be accurately calculated based on volume changes that correspond to the pressure changes due to the combustion progress in the cylinder in the burned portion BN, the unburned portion UB, and the wall surface layer portion LY.

In addition, according to the embodiment, the combustion end timing can be precisely calculated by performing Livengood-Wu integration on the temperature of the wall surface layer portion.

In addition, according to the embodiment, the combustion start timing can be precisely calculated by calculating the temperature of the central portion in the cylinder based on changes in the cylinder temperature and the cylinder pressure before combustion and performing Livengood-Wu integration on the temperature of the central portion.

In addition, according to the embodiment, the combustion start timing and combustion end timing can be calculated more accurately by calculating the ignition delay based on the amount (the amount of internal EGR gas) of exhaust gas reintroduced into the cylinder and taking this ignition delay into consideration.

<Modification>

Although the method for predicting or calculating the combustion state of an engine according to the embodiment has been described above by taking HCCI combustion as an example, this method for predicting or calculating the combustion state of an engine is applicable to not only HCCI combustion but also spark controlled compression ignition (SPCCI) combustion or the like.

In addition, although the temperature of the heat insulating core portion, that is, the temperature of the central portion in the cylinder is used as the temperature of the highest temperature portion in the embodiment described above, the present invention is not limited to the example. The central portion in the cylinder may not be the highest temperature portion depending on the shape of the combustion chamber. In that case, it is desirable to specify the highest temperature portion in advance and use the temperature of the specified highest temperature portion.

[Description of Reference Signs and Numerals]

1:      input device
3:      processing device
3a:     microprocessor
3b:     memory
5:      output device
10:     computer device
BN:     burned portion
LY:     wall surface layer portion

UB:     unburned portion

**Claims**

1.  A method of predicting or calculating a combustion state of an engine, the method comprising:

    an operating condition setting step of setting an operating condition of the engine;
    a highest temperature portion temperature calculation step of calculating a temperature of a highest temperature portion based on the operating condition, the highest temperature portion being a region in which a temperature is highest in a cylinder before combustion of the engine; and
    a combustion start timing calculation step of calculating a combustion start timing of the engine based on the temperature of the highest temperature portion;
    a lowest temperature portion temperature calculation step of calculating a temperature of a lowest temperature portion based on the operating condition and the combustion start timing, the lowest temperature portion being a region in which a temperature is lowest in the cylinder of the engine; and **characterized by**
    a combustion end timing calculation step of calculating a combustion end timing of the engine based on the temperature of the lowest temperature portion,
    wherein the lowest temperature portion temperature calculation step calculates a temperature of a wall surface layer portion (A13) based on state changes in a burned portion (A11) in which combustion has occurred, an unburned portion (A12) in which combustion has not yet occurred, and the wall surface layer portion (A13) located near a wall surface in the cylinder, and applies the temperature of the wall surface layer portion (A13) as the temperature of the lowest temperature portion, the burned portion (A11), the unburned portion (A12), and the wall surface layer portion (A13) constituting an inside of the engine or an inside of the cylinder of the engine.

2.  The method according to claim 1,
    wherein the lowest temperature portion temperature calculation step calculates the temperature of the wall surface layer portion (A13) as the temperature of the lowest temperature portion based on volume changes that correspond to pressure changes due to combustion progress in the cylinder in the burned portion (A11), the unburned portion (A12), and the wall surface layer portion (A13).

3.  The method according to claim 1 or 2,
    wherein the combustion end timing calculation step calculates the combustion end timing by performing Livengood-Wu integration on the temperature of the lowest temperature portion.

4.  The method according to any one of the preceding claims,
    wherein the highest temperature portion temperature calculation step calculates a temperature of a central portion in the cylinder of the engine as the temperature of the highest temperature portion.

5.  The method according to any one of the preceding claims,

    wherein the highest temperature portion temperature calculation step calculates the temperature of the highest temperature portion based on a change in a cylinder pressure of the engine and a cylinder temperature before combustion included in the operating condition, and
    the combustion start timing calculation step calculates the combustion start timing by performing Livengood-Wu integration on the temperature of the highest temperature portion.

6.  The method according to any one of the preceding claims, further comprising
    an ignition delay calculation step of calculating an ignition delay in the cylinder based on an amount of exhaust gas reintroduced into the cylinder of the engine.

7.  The method according to claim 6,
    wherein the combustion start timing calculation step and the combustion end timing calculation step calculate the combustion start timing and the combustion end timing, respectively, in consideration of the ignition delay.

8.  The method according to any one of the preceding claims,
    wherein the wall surface layer portion (A13) is a portion located in the outer edge portion in the cylinder and surrounded by the cylinder head.

9. The method according to any one of the preceding claims,
wherein the thickness of the wall surface layer portion (A13) is a constant value determined according to the initial conditions throughout a cycle or a combustion cycle.

10. The method according to any one of the preceding claims, further comprising
obtaining temperature history based on volume changes according to pressure changes due to the progress of combustion in the cylinder in the burned portion (A11), the unburned portion (A12), and the wall surface layer portion (A13).

11. The method according to any one of the preceding claims,
wherein the temperature history is obtained while taking gas exchange and heat exchange between the burned portion (A11), the unburned portion (A12), and the wall surface layer portion (A13) into consideration.

12. The method according to any one of the preceding claims,
wherein the combustion is homogeneous-charge compression ignition combustion.

13. A device (10) for predicting or calculating a combustion state of an engine, the device (10) comprising a processing device (3) configured to execute the method according to any one of the preceding claims.

14. A computer program product comprising computer-readable instructions which, when loaded and executed on a processing device (3), perform the method according to any one of claims 1 to 12.

15. Use of the method according to any one of claims 1 to 12 for developing or analyzing an engine.


**Patentansprüche**

1. Ein Verfahren zum Vorhersagen oder Berechnen eines Verbrennungszustands eines Motors, wobei das Verfahren Folgendes umfasst:

einen Schritt zum Einstellen des Betriebszustands, bei dem ein Betriebszustand des Motors eingestellt wird;
einen Schritt zur Temperaturberechnung im Abschnitt mit der höchsten Temperatur zum Berechnen einer Temperatur eines Abschnitts mit der höchsten Temperatur auf der Grundlage des Betriebszustands, wobei der Abschnitt mit der höchsten Temperatur ein Bereich ist, in dem eine Temperatur in einem Zylinder vor der motorischen Verbrennung am höchsten ist; und
einen Verbrennungsstartzeitpunkt-Berechnungsschritt zum Berechnen eines Verbrennungsstartzeitpunkts des Motors auf der Grundlage der Temperatur des Abschnitts mit der höchsten Temperatur;
einen Schritt zur Temperaturberechnung im Abschnitt mit der niedrigsten Temperatur zum Berechnen einer Temperatur eines Abschnitts mit der niedrigsten Temperatur auf der Grundlage des Betriebszustands und des Verbrennungsstartzeitpunkts, wobei der Abschnitt mit der niedrigsten Temperatur ein Bereich ist, in dem eine Temperatur im Zylinder des Motors am niedrigsten ist; und
**gekennzeichnet durch**
einen Verbrennungsendzeitpunk-Berechnungsschritt zum Berechnen eines Verbrennungsendzeitpunkts des Motors auf der Grundlage der Temperatur des Abschnitts mit der niedrigsten Temperatur,
wobei der Schritt zur Temperaturberechnung im Abschnitt mit der niedrigsten Temperatur eine Temperatur eines Wandoberflächenschichtabschnitts (A13) auf der Grundlage von Zustandsänderungen in einem verbrannten Abschnitt (A11), in dem eine Verbrennung stattgefunden hat, einem unverbrannten Abschnitt (A12), in dem noch keine Verbrennung stattgefunden hat, und in dem Wandoberflächenschichtabschnitt (A13), der sich in der Nähe einer Wandoberfläche im Zylinder befindet, berechnet, und die Temperatur des Wandoberflächenschichtabschnitts (A13) als die Temperatur des Abschnitts mit der niedrigsten Temperatur, des verbrannten Abschnitts (A11), des unverbrannten Abschnitts (A12) und des Wandoberflächenschichtabschnitts (A13) anwendet, die eine Innenseite des Motors oder eine Innenseite des Zylinders des Motors bilden.

2. Das Verfahren nach Anspruch 1,
wobei der Schritt zur Temperaturberechnung des Abschnitts mit der niedrigsten Temperatur die Temperatur des Wandoberflächenschichtabschnitts (A13) als die Temperatur des Abschnitts mit der niedrigsten Temperatur auf der Grundlage von Volumenänderungen berechnet, die den Druckänderungen aufgrund des Verbrennungsfortschritts im Zylinder in dem verbrannten Abschnitt (A11), dem unverbrannten Abschnitt (A12) und dem Wandoberflächenschichtabschnitt (A13) entsprechen.

3. Das Verfahren nach Anspruch 1 oder 2, wobei der Verbrennungsendzeitpunk-Berechnungsschritt den Verbrennungsendzeitpunkt berechnet, indem eine Livengood-VVu-Integration der (*on the*) Temperatur des Abschnitts mit der niedrigsten Temperatur durchgeführt wird.

4. Das Verfahren nach irgendeinem der vorstehenden Ansprüche, wobei der Schritt zur Temperaturberechnung des Abschnitts mit der höchsten Temperatur eine Temperatur eines zentralen Abschnitts im Zylinder des Motors als die Temperatur des Abschnitts mit der höchsten Temperatur berechnet.

5. Das Verfahren nach irgendeinem der vorstehenden Ansprüche,

   wobei der Schritt zur Temperaturberechnung des Abschnitts mit der höchsten Temperatur die Temperatur des Abschnitts mit der höchsten Temperatur auf der Grundlage einer Änderung eines Zylinderdrucks des Motors und einer Zylindertemperatur vor der Verbrennung, die im Betriebszustand enthalten ist, berechnet, und wobei der Schritt zur Berechnung des Verbrennungsstartzeitpunkts den Verbrennungsstartzeitpunkt berechnet, indem eine Livengood-VVu-Integration der Temperatur des Abschnitts mit der höchsten Temperatur durchgeführt wird.

6. Das Verfahren nach irgendeinem der vorstehenden Ansprüche, das ferner Folgendes umfasst: einen Schritt zur Berechnung der Zündverzögerung, bei dem eine Zündverzögerung im Zylinder auf der Grundlage einer in den Zylinder des Motors wieder eingeleiteten Abgasmenge berechnet wird.

7. Das Verfahren nach Anspruch 6, wobei der Verbrennungsstartzeitpunkt-Berechnungsschritt und der Verbrennungsendzeitpunkt-Berechnungsschritt den Verbrennungsstartzeitpunkt bzw. den Verbrennungsendzeitpunkt unter Berücksichtigung der Zündverzögerung berechnen.

8. Das Verfahren nach irgendeinem der vorstehenden Ansprüche, wobei der Wandoberflächenschichtabschnitt (A13) ein Abschnitt ist, der im äußeren Randabschnitt im Zylinder angeordnet und vom Zylinderkopf umgeben ist.

9. Das Verfahren nach irgendeinem der vorstehenden Ansprüche, wobei die Dicke des Wandoberflächenschichtabschnitts (A13) ein konstanter Wert ist, der entsprechend den Ausgangsbedingungen während eines Zyklus oder eines Verbrennungszyklus bestimmt wird.

10. Das Verfahren nach irgendeinem der vorstehenden Ansprüche, das ferner Folgendes umfasst: Erhalten einer Temperaturhistorie auf der Grundlage von Volumenänderungen entsprechend Druckänderungen aufgrund des Fortschreitens der Verbrennung im Zylinder in dem verbrannten Abschnitt (A11), dem unverbrannten Abschnitt (A12) und dem Wandoberflächenschichtabschnitt (A13).

11. Das Verfahren nach irgendeinem der vorstehenden Ansprüche, wobei die Temperaturhistorie ermittelt wird unter Berücksichtigung des Gasaustauschs und des Wärmeaustauschs zwischen dem verbrannten Abschnitt (A11), dem unverbrannten Abschnitt (A12) und dem Wandoberflächenschichtabschnitt (A13).

12. Das Verfahren nach irgendeinem der vorstehenden Ansprüche, wobei die Verbrennung eine Verbrennung mit homogener Ladung und Kompressionszündung ist.

13. Eine Vorrichtung (10) zum Vorhersagen oder Berechnen eines Verbrennungszustands eines Motors, wobei die Vorrichtung (10) eine Verarbeitungsvorrichtung (3) umfasst, die konfiguriert ist, um das Verfahren nach irgendeinem der vorstehenden Ansprüche auszuführen.

14. Ein Computerprogrammprodukt, das computerlesbare Anweisungen umfasst, die, wenn sie in eine Verarbeitungsvorrichtung (3) geladen und dort ausgeführt werden, das Verfahren nach irgendeinem der Ansprüche von 1 bis 12 ausführen.

**15.** Eine Verwendung des Verfahrens nach irgendeinem der Ansprüche von 1 bis 12 zum Entwickeln oder Analysieren eines Motors.

**Revendications**

**1.** Un procédé de prédiction ou de calcul d'un état de combustion d'un moteur, le procédé comprenant :

une étape d'établissement de condition de fonctionnement consistant à établir une condition de fonctionnement du moteur ;
une étape de calcul de température de portion présentant la température la plus élevée consistant à calculer la température d'une portion présentant la température la plus élevée en fonction de l'état de fonctionnement, la portion présentant la température la plus élevée étant une région dans laquelle la température est la plus élevée dans un cylindre avant la combustion du moteur ; et
une étape de calcul de calage de début de combustion consistant à calculer le moment du début de la combustion du moteur sur la base de la température de la portion présentant la température la plus élevée ;
une étape de calcul de température de portion présentant la température la plus basse consistant à calculer la température d'une portion présentant la température la plus basse en fonction de l'état de fonctionnement et du calage de début de combustion, la portion présentant la température la plus basse étant une région dans laquelle la température est la plus basse dans le cylindre du moteur ; et
**étant caractérisé par**
une étape de calcul de calage de fin de combustion consistant à calculer le moment de la fin de la combustion du moteur sur la base de la température de la portion présentant la température la plus basse,
sachant que l'étape de calcul de température de portion présentant la température la plus basse calcule une température d'une portion de couche de surface de paroi (A13) sur la base de changements d'état dans une portion brûlée (A11) dans laquelle la combustion s'est produite, une portion non brûlée (A12) dans laquelle la combustion ne s'est pas encore produite, et la portion de couche de surface de paroi (A13) située à proximité d'une surface de paroi dans le cylindre, et applique la température de portion de couche de surface de paroi (A13) comme la température de la portion présentant la température la plus basse, de la portion brûlée (A11), de la portion non brûlée (A12) et de la portion de couche de surface de paroi (A13) constituant un intérieur du moteur ou un intérieur du cylindre du moteur.

**2.** Le procédé d'après la revendication 1,
sachant que l'étape de calcul de température de portion présentant la température la plus basse calcule la température de la portion de couche de surface de paroi (A13) comme étant la température de la portion présentant la température la plus basse en fonction de variations de volume qui correspondent à des variations de pression dues à l'avancement de la combustion dans le cylindre dans la portion brûlée (A11), la portion non brûlée (A12), et la portion de couche de surface de paroi (A13).

**3.** Le procédé d'après la revendication 1 ou 2,
sachant que l'étape de calcul de calage de fin de combustion calcule le calage de fin de combustion en effectuant une intégration de *Livengood-Wu* sur la température de la portion présentant la température la plus basse.

**4.** Le procédé d'après l'une quelconque des revendications précédentes, sachant que l'étape de calcul de température de portion présentant la température la plus élevée calcule une température d'une portion centrale dans le cylindre du moteur comme étant la température de la portion présentant la température la plus élevée.

**5.** Le procédé d'après l'une quelconque des revendications précédentes,

sachant que l'étape de calcul de température de portion présentant la température la plus élevée calcule la température de la portion présentant la température la plus élevée en fonction d'un changement de la pression de cylindre du moteur et d'une température de cylindre avant la combustion incluse dans l'état de fonctionnement, et que
l'étape de calcul de calage de début de combustion calcule le calage du début de la combustion en effectuant une intégration *Livengood-Wu* sur la température de la portion présentant la température la plus élevée.

**6.** Le procédé d'après l'une quelconque des revendications précédentes, comprenant en outre :
une étape de calcul de délai d'allumage consistant à calculer un délai d'allumage dans le cylindre en fonction d'une quantité de gaz d'échappement réintroduite dans le cylindre du moteur.

7. Le procédé d'après la revendication 6,
sachant que l'étape de calcul de calage de début de combustion et l'étape de calcul de calage de fin de combustion calculent respectivement le calage du début de combustion et le calage de la fin de combustion en tenant compte du délai d'allumage.

8. Le procédé d'après l'une quelconque des revendications précédentes,
sachant que la portion de couche de surface de paroi (A13) est une portion située dans la portion de bord extérieur dans le cylindre et entourée par la culasse.

9. Le procédé d'après l'une quelconque des revendications précédentes,
sachant que l'épaisseur de la portion de couche de surface de paroi (A13) est une valeur constante déterminée en fonction des conditions initiales tout au long d'un cycle ou d'un cycle de combustion.

10. Le procédé d'après l'une quelconque des revendications précédentes, comprenant en outre le fait de :
obtenir un historique des températures sur la base de variations de volume conformément à des variations de pression dues à l'avancement de la combustion dans le cylindre dans la portion brûlée (A11), la portion non brûlée (A12), et la portion de la couche de surface de paroi (A13).

11. Le procédé d'après l'une quelconque des revendications précédentes, sachant que l'historique des températures est obtenu en prenant en compte les échanges de gaz et les échanges de chaleur entre la portion brûlée (A11), la portion non brûlée (A12), et la portion de couche de surface de paroi (A13).

12. Le procédé d'après l'une quelconque des revendications précédentes, sachant que la combustion est une combustion à allumage par compression à charge homogène.

13. Un dispositif (10) de prédiction ou de calcul d'un état de combustion d'un moteur, le dispositif (10) comprenant un dispositif de traitement (3) configuré pour exécuter le procédé d'après l'une quelconque des revendications précédentes.

14. Un produit programme d'ordinateur comprenant des instructions lisibles par ordinateur qui, lorsqu'elles sont chargées et exécutées sur un dispositif de traitement (3), exécutent le procédé d'après l'une quelconque des revendications de 1 à 12.

15. Une utilisation du procédé d'après l'une quelconque des revendications de 1 à 12 pour la mise au point ou l'analyse d'un moteur.

## FIG. 1

## FIG. 2

# FIG. 3

## FIG. 4

## FIG. 5

## FIG. 6

## FIG. 7

## FIG. 8

## FIG. 9

## FIG. 10

*FIG. 11*

## FIG. 12

## FIG. 13

```
                    START
                      │
                      ▼
        ┌──────────────────────────────┐  S1
        │   SET OPERATING CONDITION    │
        └──────────────────────────────┘
                      │
                      ▼
        ┌──────────────────────────────┐  S2
        │   INITIALIZE WIEBE FUNCTION  │
        │    USING HEAT GENERATION     │
        │     START TIMING AND HEAT    │
        │    GENERATION END TIMING     │
        └──────────────────────────────┘
                      │
                      ▼ ◄───────────────────────────────────┐
        ┌──────────────────────────────┐  S3                │
        │   CALCULATE TEMPERATURE OF   │                    │
        │    INSULATING CORE PORTION   │                    │
        └──────────────────────────────┘                    │
                      │                                      │
                      ▼                                      │
        ┌──────────────────────────────┐  S4                │
        │    CALCULATE COMBUSTION      │                    │
        │         START TIMING         │                    │
        └──────────────────────────────┘                    │
                      │                                      │
                      ▼                                      │
        ┌──────────────────────────────┐  S5                │
        │    MOVE COMBUSTION START     │                    │
        │   TIMING TO HEAT GENERATION  │                    │
        │         START TIMING         │                    │
        └──────────────────────────────┘                    │
                      │                                      │
                      ▼                                      │
        ┌──────────────────────────────┐  S6                │
        │   CALCULATE TEMPERATURE OF   │                    │
        │  WALL SURFACE LAYER PORTION  │                    │
        │   BASED ON STATE CHANGES OF  │                    │
        │      INDIVIDUAL REGIONS      │                    │
        └──────────────────────────────┘                    │
                      │                                      │
                      ▼                                      │
        ┌──────────────────────────────┐  S7                │
        │    CALCULATE COMBUSTION      │                    │
        │         END TIMING           │                    │
        └──────────────────────────────┘                    │
                      │                                      │
                      ▼                                      │
               ╱─────────────╲  S8                          │
              ╱     HEAT       ╲                            │
             ╱  GENERATION      ╲   NO      ┌──────────────────────────────┐  S10
            ╱ END TIMING MATCHES ╲──────────►│   SET NEW HEAT GENERATION    │
            ╲   COMBUSTION END   ╱           │         END TIMING           │
             ╲     TIMING?      ╱            └──────────────────────────────┘
              ╲───────────────╱
                      │ YES
                      ▼              S9
        ┌──────────────────────────────┐
        │  OUTPUT COMBUSTION START     │
        │  TIMING AND COMBUSTION       │
        │         END TIMING           │
        └──────────────────────────────┘
                      │
                      ▼
                    END
```

29

## FIG. 14

FIG. 15

## FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018200026 A

- JP 2008075633 A

### Non-patent literature cited in the description

- **YUU SHINKAI et al.** Development of Empirical Statistical Engine Model and System Validation Method for Variable Compression Ratio Engine. *Society of Automotive Engineers of Japan, Inc. 2017 Autumn Meeting 20176212,* 2017
- **S.B. FIVELAND.** Development of a Two-Zone HCCI Combustion Model Accounting for Boundary Layer Effects. *SAE2001-01-1028,* 2001
- **B. LAULER.** *SAE2014-01-1276,* 2014
- **R.OGINK.** Gasoline HCCI Modeling: An Engine Cycle Simulation Code with a Multi-Zone Combustion Model. *SAE 2002-01-1745,* 2001
- **J.M. KANG.** Concept and Implementation of a Robust HCCI Engine Controller. *SAE2009-01-1131*

- **T.KUBOYAMA et al.** A Study of Control Strategy for Combustion Mode Switching Between HCCI and SI with the Blowdown Supercharging System. *SAE2012-01-1122,* 2012
- **AKIRA MIYOSHI et al.** Construction of a Detailed Kinetic Model for Gasoline Surrogate Mixtures. *Transactions of Society of Automotive Engineers of Japan,* 2017, vol. 48 (5), 1021-1026
- **LIVENGOOD, J.C ; WU, P.C.** Correlation of Autoignition Phenomenon in Internal Combustion Engines and Rapid Compression Machines. *Proceedings of Fifth International Symposiumon Combustion,* 1955, 347